# EUROPÄISCHE PATENTSCHRIFT

(11) **EP 1 728 314 B1**
(45) Veröffentlichungstag und Bekanntmachung des Hinweises auf die Patenterteilung: **24.11.2010**
(21) Anmeldenummer: 05707012.0
(22) Anmeldetag: 26.01.2005
(51) Int. Cl.: H02P 3/18, H02P 3/26, H02K 7/10

(54) **ANTRIEB UND BREMSE**
DRIVE UNIT AND BRAKE
SYSTEME D'ENTRAINEMENT ET DE FREINAGE

(30) Priorität: 16.03.2004 DE 102004013033
(43) Veröffentlichungstag der Anmeldung: 06.12.2006
(73) Patentinhaber: SEW-EURODRIVE GmbH & Co. KG, 76646 Bruchsal (DE)
(72) Erfinder: BECKER, Günter, 76684 Östringen (DE); SCHMIDT, Josef, 76676 Graben-Neudorf (DE)
(86) Internationale Anmeldenummer: PCT/EP2005/000735
(87) Internationale Veröffentlichungsnummer: WO 2005/096488

(56) Entgegenhaltungen:
- EP-A- 1 162 726
- GB-A- 1 390 432
- PATENT ABSTRACTS OF JAPAN Bd. 2000, Nr. 05, 14. September 2000 (2000-09-14) -& JP 2000 038265 A (HITACHI BUILDING SYSTEMS CO LTD), 8. Februar 2000 (2000-02-08)
- PATENT ABSTRACTS OF JAPAN Bd. 1996, Nr. 10, 31. Oktober 1996 (1996-10-31) -& JP 08 157014 A (TOYOTA AUTOM LOOM WORKS LTD), 18. Juni 1996 (1996-06-18)

## Beschreibung

Die Erfindung betrifft einen Antrieb und Bremse.

Aus der DE 36 13 294 ist eine elektromagnetisch betätigbare Bremse für einen Motor bekannt. Dabei wird die Bremse mit einer unipolaren Spannung betrieben. Solche Gleichspannungsbremsen werden insbesondere bei Antrieben verwendet, die Elektromotoren umfassen.

Aus der EP 1 162 726 A1 ist Elektromotor bekannt, der über Versorgungsleitungen aus einer Endstufe eines Umrichters gespeist wird. Dabei ist ein Halbleiterschalter vorgesehen, über den elektrische Leistung von den Versorgungsgeltungen einem Bremswiderstand gesteuert zuführbar ist. Selbst bei Ausfall zweier Halbbrücken der Endstufe des Umrichters ist noch Leistung an den Bremswiderstand zuführbar.

Aus der GB 1390 432 ist bekannt, einen Bremswiderstand aus den Versorgungsleitungen kapazitiv zu versorgen.

Aus der DE 101 46 896 A1 ist ein Antriebssystem bekannt, das eine Bremse und einen Elektromotor umfasst, der mittels einer Endstufe versorgt ist.

Aus der US 4 090 117 A ist ein Einphasen-Kondensatormotor mit einer Bremse bekannt, wobei die Spule der als Ruhebremse ausgebildeten Bremse mit Wechselstrom erregt wird, der von den Versorgungsleitungen des Motors direkt entnommen wird.

Umrichter umfassen zumindest eine Endstufe und eine Steuerelektronik, die nach einem Pulsweitenmodulationsverfahren arbeitet.

Der Erfindung liegt daher die Aufgabe zugrunde, die Sicherheit bei industriellen Antrieben zu erhöhen.

Erfindungsgemäß wird die Aufgabe bei dem Antrieb nach den in Anspruch 1 angegebenen Merkmalen gelöst.

Wesentliche Merkmale der Erfindung bei dem Antrieb sind, dass der Antrieb zumindest eine Bremse und einen Elektromotor umfasst, der mittels Versorgungsleitungen mit einer Endstufe verbunden ist,
wobei die Bremse aus einer Bremsenansteuerung versorgt ist,
wobei zur Versorgung der Bremsenansteuerung diese mittels Kondensatoren mit den Versorgungsleitungen verbunden ist.

Von Vorteil ist dabei, dass die Versorgung der Bremsenansteuerung von den Wechselspannungen der Versorgungsleitungen abhängt. Somit ist vortelligerweise die Funktionsweise der Endstufe, also auch insbesondere die Funktionsweise eines die Endstufe umfassenden Umrichters, Wechselrichters oder Stromrichters, mit der Funktionsweise der Bremse verknüpfbar. Insbesondere ist somit eine Sicherheitsbremse verwirklichbar, die bei Fehlern in der Endstufe oder in den genannten Geräten zu einem Einfallen der Bremse führt. Der Antrieb ist also vorteiligerweise bei Fehlern bremsbar. Dies gilt insbesondere auch für Spannungsausfall, wie beispielsweise Netzausfall. Die Kondensatoren und die Bremsenansteuerung sowie die Bremse sind vom Fachmann geeignet dimensionierbar für das Reagieren bei Auftreten genannter und weiterer Fehler.

Der erfindungsgemäße Antrieb umfasst also zumindest eine Bremse und einen Elektromotor, der über Versorgungsleitungen von einer Endstufe mit einem Wechselstrom gespeist wird, wobei die Bremse aus einer Bremsenansteuerung versorgt wird, die mittels mindestens eines Kondensators mit mindestens einer der Versorgungsleitungen verbunden ist und daraus gespeist wird.

Bei einer vorteilhaften Ausgestaltung ist die Endstufe pulsweitenmoduliert betreibbar. Von Vorteil ist dabei, dass der Motor nicht nur versorgbar sondern auch steuerbar ist und bei Rückführung von Gebersignalen oder anderer elektrotechnischer Größen sogar regelbar.

Bei einer vorteilhaften Ausgestaltung fällt bei dauerhaftem Auftreten von Gleichspannungen oder Nullspannungen auf den Versorgungsleitungen die Bremse ein, also Bremsmoment an die Rotorwelle des Motors überträgt oder an eine mit der Rotorwelle verbundene Welle. Insbesondere fällt bei Unterschreiten einer kritischen Mindestfrequenz der jeweiligen zeitlichen Verläufe der Potentiale der Versorgungsleitungen die Bremse ein, also Bremsmoment an die Rotorwelle des Motors überträgt oder an eine mit der Rotorwelle verbundene Welle. Von Vorteil ist dabei, dass somit eine nach physikalischen Gesetzen wirksame hohe Sicherheit erreichbar ist. Denn wenn die Bremsenansteuerung nicht versorgt ist, fällt der durch die Elektromagneten der Bremse fließende Strom ab und eine entgegen der Magnetkraft wirkende Federkraft ist in der Lage einen Bremsbelag gegen eine Bremsfläche zu drücken.

Statt Unterschreiten einer Frequenz fällt die Bremse auch bei Unterschreiten kritischer Effektivwerte der Potentiale der Versorgungsleitungen ein, überträgt also Bremsmoment an die Rotorwelle des Motors oder an eine mit der Rotorwelle verbundene Welle. Von Vorteil ist dabei, dass auch für diesen Fehler bewirkten Fall ein sicheres Abschalten vorgesehen ist.

Bei einer vorteilhaften Ausgestaltung umfasst die Bremse eine einteilig oder zweiteilig ausgeführte Bremsspule. Von Vorteil ist dabei, dass bei der einteiligen Ausführung eine kostengünstige Bremse vorsehbar ist und bei der zweiteiligen Bremsspule eine zeitlich sehr schnell einfallende Bremsspule vorsehbar ist. Dazu ist dann eine Bremsenansteuerung auszugestalten, die entsprechend der in DE 36 13 294 wirksam ist, aber mittels Kondensatoren aus den Versorgungsleitungen versorgt ist.

Wesentliche Merkmale bei der erfindungsgemäßen Bremse sind, dass sie elektromagnetisch betätigbar ist, wobei e Bremse für einen Elektromotor, der mittels Versorgungsleitungen mit einer Endstufe, insbesondere eines Umrichters, Wechselrichters oder ähnlichen Wandlers, verbunden ist, wobei die Bremse aus einer Bremsenansteuerung versorgt ist, wobei zur Versorgung der Bremsenansteuerung diese mittels mindestens eines Kondensators mit den Versorgungsleitungen verbunden ist.

Von Vorteil ist bei der Bremse, dass sie eine elektromagnetisch betätigbare Bremse ist und die Betätigung somit eine elektrische Versorgung benötigt. Bei Ausfall dieser Versorgung fällt die Bremse ein und der mechanisch angekoppelte Elektromotor ist abgebremst beziehungsweise fest gehalten. Erst wenn elektrische Versorgung zur Verfügung steht kann die Bremse gelüftet werden. Somit ist die Sicherheit des Antriebs bei Notfällen oder Fehlern, wie Netzausfall oder dergleichen erhöht.

Weitere Vorteile ergeben sich aus den Unteransprüchen.

### Bezugszeichenliste

- 1: Endstufe, dreiphasig
- 2: Motor
- 3: Bremse
- 4: Bremsenansteuerung
- C1: Kondensator
- C2: Kondensator
- C3: Kondensator

Die Erfindung wird nun anhand von Abbildungen näher erläutert:

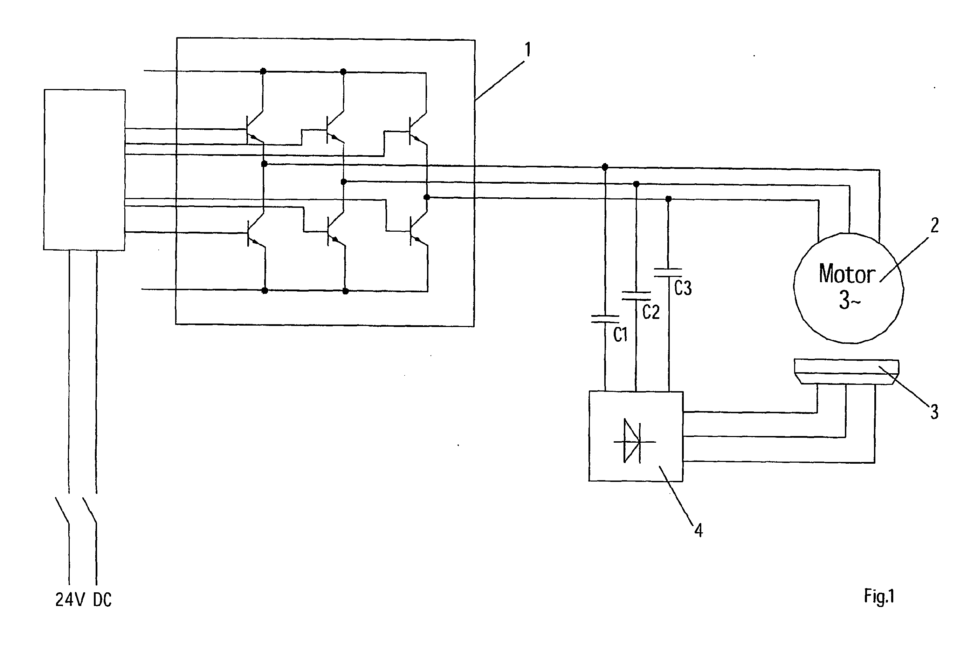

In der Figur 1 ist ein erfindungsgemäßer Antrieb gezeigt. Er umfasst zumindest eine Endstufe 1 eines Umrichters, eine Bremse 3 mit einer zugehörigen Bremsansteuerung 4 und einen Motor 2, auf dessen Welle, insbesondere Rotorwelle oder auf einer mit dieser verbundenen Welle, die Bremse Bremsmoment überträgt, wenn sie eingefallen ist, also nicht gelüftet ist. Die Endstufe wird von einer Steuerelektronik angesteuert, die mit 24 V Gleichspannung (DC) versorgt ist.

Der Umrichter weist einen Gteichspannungszwischenkreis auf, aus dem die Schalter der Endstufe 1 versorgt werden. Die Schalter der Endstufe werden derart unter Verwendung von Pulsweitenmodulationsverfahren angesteuert, dass der Motor mit einer dreiphasigen pulsweitenmodulierten Spannung versorgt wird. Dazu stellt der Umrichter am Ausgang seiner Endstufe in jedem Augenblick einen Drehspannungszeigerwert zur Verfügung, also drei Aüsgangspotentialwerte, die an den drei Versorgungsleitungen zum Motor hin anliegen. Zur Erzeugung der Werte stellen die Schalter der Endstufe pro Pulsweitenmodulationsperiode kurzzeitig, jeweils verschieden lang eine Verbindung mit den verschiedenen Potentialen des die Endstufe versorgenden sogenannten Gleichspannungs-Zwischenkreises verbunden oder getrennt. Im zeitlichen Mittelwert über eine Pulsweitenmodulationsperiode wird der gewünschte Potentialwert erzeugt.

Die Endstufe ist mit sicherer Abschaltung ausgeführt. Dabei ist die Sicherheit solchermaßen gestaltet, dass nach Abschalten der Steuerelektronik des Umrichters kein Drehfeld mehr erzeugbar ist und somit keine Umdrehung des Rotors vom Umrichter her wirkend erzwingbar ist. Somit ist die Endstufe und die Leistungsstufe sicher abschaltbar. Das sichere Abschalten ist auch erfindungsgemäß ausführbar nach DE 102 06 107 A1 oder nach DE 102 07 834 A1. Das sichere Abschalten der Endstufe verhindert die Ausbildung eines Drehfeldes. Dies bedeutet aber auch, dass die Bremsenansteuerung ohne Versorgung ist.

Die Bremsenansteuerung 4 umfasst zumindest einen Gleichrichter, der mittels der Kondensatoren C1, C2, C3 kapazitiv aus den Versorgungsleitungen für den Motor versorgt wird. Mit der vom Gleichrichter erzeugten unipolaren Spannung ist die Bremse versorgbar. Die Bremse ist wie bei der DE 36 13 294 zweigeteilt ausgeführt.

Wenn die Steuerelektronik des Umrichters versagt oder deren Spannungsversorgung oder ein entsprechender Ausfall oder Schaden auftritt, funktioniert die Versorgung des Elektromotors nicht korrekt. Insbesondere liegen in solchen Fällen am Motor drei dauerhafte Gleichspannungen oder sogar Nullspannungen an. Dies führt dazu, dass die Versorgung der Bremsenansteuerung unterbrochen ist, da dann über die kapazitive Ankoppelung bei Gleichspannungen keine Energie übertragen wird. Die Elektromagnetwicklungen der Bremse werden dann stromlos und die Bremse fällt somit ein. Dieses Einfallen wird durch die Kraft von Federelementen bewirkt, da die zuvor gegenwirkende Kraft der bestromten Elektromagnete ausfällt.

Auf diese Weise ist eine Sicherheitsbremse ausgebildet, die automatisch und physikalisch absolut sicher einfällt und Bremsmoment erzeugt, sobald der Umrichter nicht mehr fehlerfrei funktioniert. Bei fehlerfreiem Funktionieren liegen an den drei Versorgungsleitungen zwischen Endstufe und Motor stets Wechselspannungen an, die eine Frequenz im Bereich von mehr als 1 kHz aufweisen, insbesondere 4kHz oder 8kHz oder 16kHz. Bei weiteren erfindungsgemäßen Ausführungsbeispielen sind auch Frequenzbänder vorsehbar, insbesondere um die genannten Frequenzen herum. Dabei ist zu beachten, dass diese Wechselspannungen auch dann anliegen, wenn der Motor ein Synchronmotor ist und dieser vom Umrichter auf Stillstand geregelt wird. Denn auch dann werden die drei Potential- oder Spannungswerte der drei Leitungen mittels Pulsweitenmodulation erzeugt. Dabei ist der Potential- oder Spannungswerte immer der Mittelwert über eine Pulsweitenmodulationsperiode.

Die geschilderten Gleichspannungen und Nullspannungen treten nicht nur in den geschilderten Fehlerfällen auf, sondern auch im Normalbetrieb, wenn ein reguläres Stillsetzen des Motors erforderlich ist, beispielsweise auch beim Abschalten des Umrichters.

Bei weiteren erfindungsgemäßen Ausführungsbeispielen ist die Bremse auch nur einteilig ausgeführt, wobei dann nur zwei Leitungen von der Bremsenansteuerung 4 zur Bremse 3 führen.

Bei weiteren erfindungsgemäßen Ausführungsbeispielen ist der Motor kein dreiphasig zu versorgender sondern ein zweiphasig zu versorgender Motor. Dementsprechend weniger Kondensatoren sind zur Versorgung der Bremsenansteuerung 4 notwendig.

Bei weiteren erfindungsgemäßen Ausführungsbeispielen ist ein Reluktanzmotor, ein Asynchronmotor oder ein Synchronmotor als Elektromotor vorgesehen.

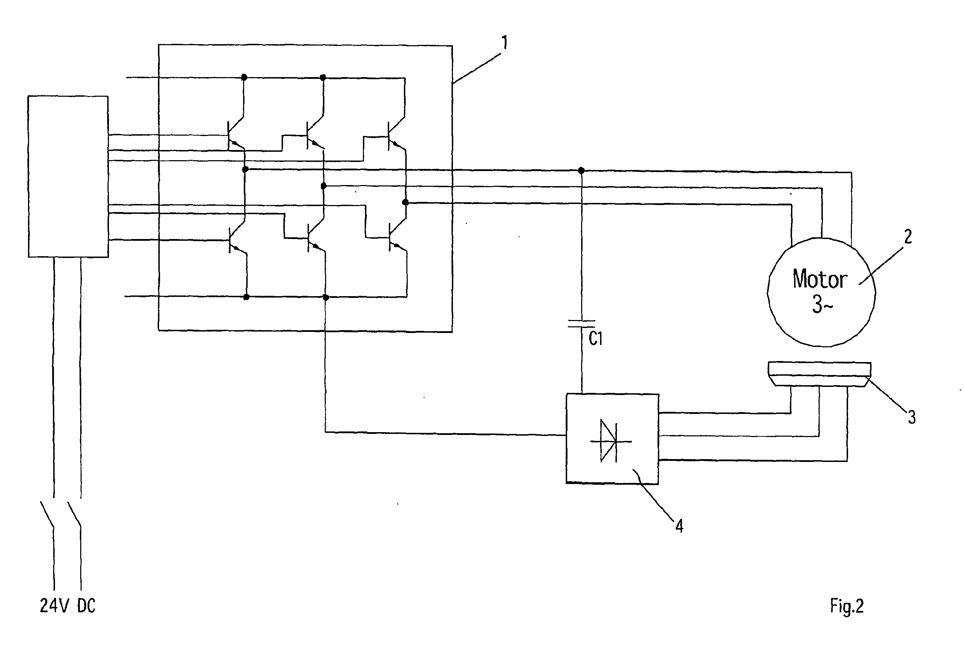

Bei einem weiteren erfindungsgemäßen Ausführungsbeispiel nach Figur 2 ist auch nur ein Kondensator C1 statt der drei Kondensatoren C1, C2, C3 vorsehbar. Somit sind weniger Teile verwendbar und Kosten reduzierbar.

Die Erfindung ist auch auf Stromrichter entsprechend anwendbar.

## Patentansprüche

1. Antrieb, umfassend zumindest eine **elektromagnetisch betätigbare** Bremse (3) und einen Elektromotor (2), der **über** Versorgungsleitungen von der Endstufe (1) eines stromrichters **mit einem Wechselstrom gespeist wird,**
wobei die Bremse (3) aus einer Bremsenansteuerung (4) versorgt wird,
**die mittels mindestens eines Kondensators (C1, C2, C3) mit mindestens einer** dieser **Versorgungsleitungen** des Elektromotors (2) **verbunden ist und** ebenfalls aus der Endstufe (1) **gespeist wird.**

2. Antrieb nach mindestens einem der vorangegangenen Ansprüche,
**dadurch gekennzeichnet, dass**
die Endstufe (1) von einem Umrichter, Wechselrichter oder Stromrichter umfasst wird.

3. Antrieb nach mindestens einem der vorangegangenen Ansprüche,
**dadurch gekennzeichnet, dass**
die Endstufe (1) pulsweitenmoduliert betreibbar ist.

4. Antrieb nach mindestens einem der vorangegangenen Ansprüche,
**dadurch gekennzeichnet, dass**
bei dauerhaftem Auftreten von Gleichspannungen oder Nullspannungen auf den Versorgungsleitungen die Bremse (3) einfällt, also Bremsmoment an die Rotorwelle des Motors überträgt oder an eine mit der Rotorwelle verbundene Welle.

5. Antrieb nach mindestens einem der vorangegangenen Ansprüche,
**dadurch gekennzeichnet, dass**
bei Unterschreiten einer kritischen Mindestfrequenz der jeweiligen zeitlichen Verläufe der Potentiale der Versorgungsleitungen die Bremse einfällt, also Bremsmoment an die Rotorwelle des Motors überträgt oder an eine mit der Rotorwelle verbundene Welle.

6. Antrieb nach mindestens einem der vorangegangenen Ansprüche,
**dadurch gekennzeichnet, dass**
bei Unterschreiten kritischer Effektivwerte der Potentiale der Versorgungsleitungen die Bremse einfällt, also Bremsmoment an die Rotorwelle des Motors überträgt oder an eine mit der Rotorwelle verbundene Welle.

7. Antrieb nach mindestens einem der vorangegangenen Ansprüche,
**dadurch gekennzeichnet, dass**
die Bremse (3) eine einteilig oder zweiteilig ausgeführte Bremsspule umfasst.

8. Antrieb nach mindestens einem der vorangegangenen Ansprüche,
**dadurch gekennzeichnet, dass**
zur Versorgung der Bremsenansteuerung (4) diese mittels drei Kondensatoren C1, C2, C3 bei dreiphasiger Versorgung und mittels zwei Kondensatoren bei zweiphasiger Versorgung mit den Versorgungsleitungen verbunden ist.

## Claims

1. Drive, comprising at least an electromagnetically actuable brake (3) and an electric motor (2) which is fed with an alternating current by the output stage (1) of a power converter via supply lines,
the brake (3) being supplied from a brake control (4) which is connected to at least one of these supply lines of the electric motor (2) by means of at least one capacitor (C1, C2, C3) and which is likewise fed from the output stage (1).

2. Drive according to at least one of the preceding claims,
**characterised in that**
the output stage (1) comprises a converter, inverter or power converter.

3. Drive according to at least one of the preceding claims,
**characterised in that**
the output stage (1) is operable in a pulse-width-modulated manner.

4. Drive according to at least one of the preceding claims,
**characterised in that**
the brake (3) is activated, i.e. brake torque is transmitted to the rotor shaft of the motor or to a shaft connected to the rotor shaft, on long-lasting occurrence of DC voltages or zero voltages on the supply lines.

5. Drive according to at least one of the preceding claims,
**characterised in that**
the brake is activated, i.e. brake torque is transmitted to the rotor shaft of the motor or to a shaft connected to the rotor shaft, if a critical minimum frequency of the respective time characteristics of the potentials of the supply lines is undershot.

6. Drive according to at least one of the preceding claims,
**characterised in that**
the brake is activated, i.e. brake torque is transmitted to the rotor shaft of the motor or to a shaft connected to the rotor shaft, if critical RMS values of the potentials of the supply lines are undershot.

7. Drive according to at least one of the preceding claims,
**characterised in that**
the brake (3) comprises a brake coil of one-part or two-part configuration.

8. Drive according to at least one of the preceding claims,
**characterised in that**
for the supply of the brake control (4) the latter is connected to the supply lines by means of three capacitors C1, C2, C3 in the case of three-phase supply and by means of two capacitors in the case of two-phase supply.

## Revendications

1. Entraînement, comprenant au moins un frein à commande électromagnétique (3) et un moteur électrique (2) qui est alimenté en courant alternatif par des lignes d'alimentation à partir de l'étage final (1) d'un convertisseur statique,
le frein (3) étant alimenté à partir d'une commande de frein (4) qui est reliée au moyen d'au moins un condensateur (C1, C2, C3) à au moins une de ces lignes d'alimentation du moteur électrique (2) et également alimentée à partir de l'étage final (1).

2. Entraînement selon au moins une des revendications précédentes,
**caractérisé en ce que**
l'étage final (1) fait partie d'un variateur de vitesse, d'un onduleur ou d'un convertisseur statique.

3. Entraînement selon au moins une des revendications précédentes,
**caractérisé en ce que**
l'étage final (1) peut fonctionner en modulation de largeur d'impulsion.

4. Entraînement selon au moins une des revendications précédentes,
**caractérisé en ce que**
le frein (3) se ferme, c'est-à-dire transmet un couple de freinage à l'arbre rotor du moteur ou à l'arbre relié à l'arbre rotor, en cas d'apparition durable de tensions continues ou de tensions nulles sur les lignes d'alimentation.

5. Entraînement selon au moins une des revendications précédentes,
**caractérisé en ce que**
le frein se ferme, c'est-à-dire transmet un couple de freinage à l'arbre rotor du moteur ou à l'arbre relié à l'arbre rotor, lorsqu'une fréquence minimale critique des variations dans le temps respectives des potentiels des lignes d'alimentation n'est pas atteinte.

6. Entraînement selon au moins une des revendications précédentes,
**caractérisé en ce que**
le frein se ferme, c'est-à-dire transmet un couple de freinage à l'arbre rotor du moteur ou à l'arbre relié à l'arbre rotor, lorsque des valeurs efficaces critiques des potentiels des lignes d'alimentation ne sont pas atteintes.

7. Entraînement selon au moins une des revendications précédentes,
**caractérisé en ce que**
le frein (3) comprend une bobine de frein réalisée en une partie ou en deux parties.

8. Entraînement selon au moins une des revendications précédentes,
**caractérisé en ce que**
pour l'alimentation de la commande de frein (4), celle-ci est reliée aux lignes d'alimentation au moyen de trois condensateurs C1, C2, C3 dans le cas d'une alimentation triphasée et au moyen de deux condensateurs dans le cas d'une alimentation diphasée.
